# FASCICULE DE BREVET EUROPEEN

(11) **EP 0 748 653 B1**
(45) Date de publication et mention de la délivrance du brevet: **26.01.2000**
(21) Numéro de dépôt: 96401184.5
(22) Date de dépôt: 04.06.1996
(51) Int. Cl.: B01J 31/02

(54) **Nouvelle composition catalytique à base de complexes de métaux de transition et procédé pour l'hydrogénation des composés insaturés**
Übergangsmetallkomplexe enthaltende neue katalytische Zusammensetzung und Verfahren für die Hydrierung von ungesättigten Verbindungen
New catalytic composition containing transition metals complexes and insatured compounds hydrogenation process

(30) Priorité: 16.06.1995 FR 9507328
(43) Date de publication de la demande: 18.12.1996
(73) Titulaire: INSTITUT FRANCAIS DU PETROLE, 92502 Rueil-Malmaison (FR)
(72) Inventeur: Chauvin, Yves, 78230 Le Pecq (FR); Mussmann, Lothar, 63457 Hanau-Wolfgang (DE); Olivier, Hélène, 92500 Rueil Malmaison (FR)

(56) Documents cités:
- EP-A- 0 296 550
- EP-A- 0 391 680
- EP-A- 0 483 536
- EP-A- 0 553 009
- EP-A- 0 602 463
- US-A- 4 169 853

## Description

L'objet de la présente invention est une nouvelle composition catalytique et son utilisation pour l'hydrogénation et l'isomérisation de composés insaturés, la dite composition résultant de l'interaction d'un sel organique-inorganique liquide à la température de réaction, qu'on appellera par la suite "sel fondu", et d'un complexe d'un métal de transition des groupes 8, 9 et 10.

On connait un très grand nombre de complexes de métaux de transition des groupes 8 et 9 susceptibles de catalyser l'hydrogénation de composés insaturés et qui sont solubles dans des solvants organiques compatibles, ou dans les réactifs et dans les produits issus de l'hydrogénation. Ces catalyseurs ont fait l'objet d'un article dans Principle and Applications of Organotransition Metal Chemistry de J.P. Collman, University Science Books, Mill Valley, U.S.A.

Il a été décrit dans le brevet U.S. 3.565.823 une composition consistant en une dispersion contituée d'un composé notamment d'un métal de transition dans un sel d'étain ou de germanium et d'un ammonium ou d'un phosphonium quaternaire. Dans le brevet U.S. 3.657.368 a été décrit un procédé d'hydrogénation des oléfines et dans le brevet U.S. 3.919.271 un procédé d'hydrogénation des nitriles utilisant tous deux la composition précédente . Dans le brevet U.S. 3.832.391 a été revendiqué un procédé de carbonylation des oléfines par la même composition.

Les compositions précédemment décrites présentent le désavantage d'avoir un point de fusion relativement élevé, la réaction d'hydrogénation ayant alors lieu par exemple à 150°C.

Il a maintenant été trouvé que les complexes de métaux de transition des groupes 8 et 9 en particulier les complexes du ruthénium, du rhodium et de l'iridium, associés à un sel organique-inorganique liquide à basse température sont susceptibles d'hydrogéner les composés insaturés.

Un objet de l'invention est une composition catalytique comprenant au moins un composé d'un métal de transition des groupes 8, 9 en particulier les complexes du ruthénium, du rhodium et de l'iridium et au moins un sel d'ammonium et/ou de phosphonium quaternaire, ladite composition résultant de la dissolution, du moins en partie, d'un composé d'un métal de transition dans un "sel fondu" .

Un autre objet de l'invention est un procédé pour l'hydrogénation des doubles ou triples liaisons entre carbone des composés insaturés, procédé dans lequel le ou les composés insaturés sont mis au contact d'un complexe d'un métal de transition des groupes 8 et 9 en particulier du ruthénium, du rhodium et de l'iridium, ledit composé étant dissous au moins en partie dans un "sel fondu". Ledit milieu "sel fondu" est constitué d'un cation organique et d'un anion minéral. Les produits issus de l'hydrogénation sont peu ou pas solubles dans la composition catalytique.

Les "sels fondus" selon l'invention, sont non aqueux, à caractère ionique et ont pour formule générale Q⁺ A⁻ dans laquelle Q⁺ représente un ammonium quaternaire et/ou d'un phosphonium quaternaire et A⁻ représente tout anion connu susceptible de former un sel liquide à basse température c'est-à-dire en dessous de 150°C et avantageusement d'au plus 80° C, et de préférence en dessous 50°C tels les ions, tétrafluoroborate,tétrachloroborate, hexafluorophosphate,hexafluoroantimonate hexafluoroarsénate, trifluorométhylsulfonate, fluorosulfonate, tétrachloroaluminate, dichlorocuprate, trichlorozincate. Il pourrait être également employés des anions choisis dans le groupe formé par le trichlorocuprate, le tétrachlorocuprate, l'heptachloroaluminate, le décachloroaluminate. Une composition catalytique particulière ne contient pas les ions aluminate. Sont exclus de l'invention les anions halogénures et hydroxyde. Les ammonium et/ou phosphonium quaternaires répondent de préférence aux formules générales NR^{I}R²R³R⁴⁺ et PR^{I}R²R³R⁴⁺, ou aux formules générales R¹R²N=CR³R⁴⁺ et R¹R²P=CR³R⁴⁺ où R^{I}, R², R³ et R⁴, identiques ou différents, représentent l'hydrogène à l'exception du cation NH₄ ⁺ et de préférence un seul substituant peut représenter l'hydrogène, ou des restes hydrocarbyles ayant de 1 à 12 atomes de carbone, par exemple des groupements alkyles, saturés ou non saturés, cycloalkyls ou aromatiques, aryl ou aralkyl, comprenant de 1 à 12 atomes de carbone. Les ammonium et/ou phosphonium peuvent également être dérivés d'hétérocycles azotés ou phosphorés comportant 1, 2 ou 3 atomes d'azote et/ou de phosphore, de formule générales: 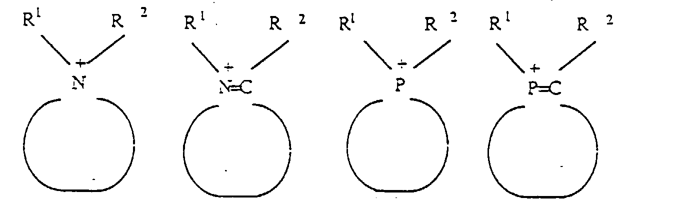 dans lesquelles les cycles sont consitués de 4 à 10 atomes, de préférence 5 à 6 atomes, R^{I} et R² étant définis comme précédemment. L'ammonium ou le phosphonium quaternaire peuvent également être un cation de formule:

R¹R²⁺N=CR³-R⁵-R³C=N⁺R¹R²

R¹R²⁺P=CR³-R⁵-R³C=P⁺R¹R²

dans laquelle R¹,R²,R³, identiques ou différents sont définis comme précédemment et R⁵ représente un reste alkylène ou phénylène. Parmi les groupements R^{I}, R², R³ et R⁴ on mentionnera les radicaux méthyl, éthyl, propyl, isopropyl, butyl, secondaire butyl, tertiaire butyl, amyl, méthylène, éthylidène, phényl ou benzyl; R⁵ pourra être un groupement méthylène, éthylène, propylène ou phénylène. Le cation ammonium et/ou phosphonium est choisi de préférence dans le groupe formé par le N-butylpyridinium, le N-éthylpyridinium, le butyl-3 méthyl-1 imidazolium, le diéthylpyrazolium, l'éthyl-3 méthyl-1 imidazolium, le pyridinium, le triméthylphénylammonium, l'éthyl-3 méthyl-1 imidazolium, le tétrabutylphosphonium. A titre d'exemples des sels utilisables selon l'invention on peut citer l'hexafluorophosphate de N-butylpyridinium, le tétrafluoroborate de N-éthyl pyridinium, le tétrafluoroborate de tétrabutylphosphonium, l'hexafluoroantimonate de butyl-3 méthyl-1 imidazolium, l'hexafluorophosphate de butyl-3 méthyl-1 imidazolium, le trifluorométhylsulfonate de butyl-3 méthyl-1 imidazolium , le fluorosulfonate de pyridinium, l'hexafluorophosphate de triméthylphénylammonium, le tétrachloroaluminate de butyl-3 méthyl-1 imidazolium, l'heptachloroaluminate de butyl-3 méthyl-1 imidazolium, le chlorure de triméthylphényl ammonium, le chlorure d'éthyl-3 méthyl-1imidazolium, le bromure de tétrabutylphosphonium, le chlorure de N-butylpyridinium, le bromure de N-éthylpyridinium, le chlorure de butyl-3 méthyl-1 imidazolium, le chlorure de diéthylpyrazolium, le chlorhydrate de pyridinium. Ces sels peuvent être utilisés seuls ou en mélange. Ils ont une fonction de solvant. En conséquence, le solvant de la composition catalytique contient majoritairement ledit (lesdits) sel(s). Si d'autres solvants sont présents, leur fonction essentielle est de permettre la mise en solution du composé du métal de transition avant son mélange avec le sel.

Les composés des métaux de transition utilisables selon l'invention sont de façon générale tous les complexes des métaux de transition connus de l'homme de l'art. Ce sont des composés zéro, mono, di ou trivalents dans lesquels le métal choisi dans le groupe formé par Fe, Ru, Os, Co, Rh, Ir, Ni, Pd, Pt, avantageusement dans le groupe formé par Ru, Rh, Ir, Co, Pt, Pd, et de préférence Ru, Rh, lr,peut être lié par exemple à des ions halogénures, hexafluorophosphosphate, hexafluoroarsenate, tétrafluoroborate, tétrachloroborate, etc... hydrure, et des ligands hydrocarbonés tels que cyclopentadiényles et cyclopentadiényles substitués, acétylacétonates et acétylacétonates substitués, ou encore à des ligands neutres tels les phosphines tertiaires, les diphosphines ditertiaires, les phosphites, les oléfines, l'oxyde de carbone, les nitriles. Ces complexes selon l'invention peuvent être mononucléaires ou polynucléaires, neutres ou ioniques. Ils peuvent renfermer un ligand chiral. A titre d'exemple parmi les complexes utilisables selon l'invention on peut citer RuH₄(PPh₃)₂, RhCl(PPh₃)₃, [Rh(norbornadiène)(PPh₃)₂]⁺ [PF₆]⁻, IrCI(PPh₃)₃, HRh(CO)(PPh₃)₃, (C₅H₅)RhCl₂, Rh(C₅Me₅)Cl₂(Ph₂PCH₂COPh), lrCl(CO)(PPh₃)₂, [Rh(norbornadiène)(PPh₃)(Ph₂PCH₂COPh)]⁺[PF₆]⁻, [Rh(norbornadiène)(bisdiphénylphosphinoéthane)]⁺[PF₆]⁻, [Rh(norbornadiène)(bisdiphénylarsinoéthane)]⁺[PF₆]⁻, [Rh(norbornadiène)(DIOP)]⁺[PF₆]⁻,[Ru(norbornadiène)(C₅Me₅)]⁺[BF₄]⁻, [(C₆Me₆)RuCl₂]₂, [(C₆H₆)RuCl₃Ru(C₆H₆)]PF₆, [RhCl(cyclooctène)₂].

Ces complexes peuvent être préparés en dehors du milieu réactionnel et y être introduits pour la réaction. Ils peuvent également être formés in situ, dans le milieu réactionnel, par introduction des composants nécessaires à leur formation. D'autres composés des métaux de transition sont utilisables, tels que les sels inorganiques, oxydes, hydroxydes, des sels organiques.

D'une façon générale, la composition catalytique peut contenir un solvant organique comme les hydrocarbures aromatiques ou des composés hydrocarbonés mais ce solvant organique est en quantité inférieure à celle du sel fondu. La composition catalytique ne contient pas d'eau.

La concentration du composé du complexe de métal de transition dans le "sel fondu" est avantageusement comprise entre 1 mmole de complexe par litre de "sel fondu" et 500 mmoles par litre, de préférence entre 2 et 200 mmoles par litre, et encore entre 2 et 100, voire 2 à 50.

Les composés entrant dans la composition selon l'invention, peuvent être mélangés dans un ordre quelconque, à une température supérieure à - 20°C, généralement comprise entre -20°C et au plus 150°C, et de préférence -20°C à 140°C et avantageusement de 0°C à 120°C, voire 0-80°C ou 0-50°C.

Un autre objet de l'invention est un catalyseur à base d'un support imprégné avec la composition catalytique précédemment décrite.

Le support présente généralement une surface spécifique de 0,01 à 1500 m²/g, de préférence 0,01 à 150 m²/g, ou mieux 0,01 à 50 m²/g. Son volume poreux total est généralement de 0,005 à 1,5 cm³/g, de préférence 0,005 à 1 cm³/g, ou mieux 0,005 à 0,8 cm³/g.
Il est choisi parmi les supports organiques ou minéraux, tels que par exemple les résines macroréticulaires, les résines perfluorées, le charbon, les oxydes SiO₂, ZrO₂, TiO₂, SnO₂, Al₂O₃, Fe₂O₃, ou HfO₂ ou toute combinaison de ces oxydes.

Le procédé de préparation du catalyseur comprend au moins une calcination du support à une température préférée de 200-600°C, suivi de l'imprégnation avec la solution catalytique selon toute méthode connue de l'homme du métier.

L'invention a également pour objet un procédé d'hydrogénation d'un composé insaturé à l'aide d'une composition catalytique ou d'un catalyseur tels que précédemment définis.

Les composés insaturés susceptibles d'être hydrogénés selon l'invention sont les oléfines simples, les dioléfines et en particulier les dioléfines conjuguées, les composés acétylèniques, les hydrocarbures aromatiques notamment polynucléaires. Ils peuvent contenir un ou des hétéroatomes notamment insaturés comme la fonction cétone ou carboxylique. A titre d'exemple on peut citer l'hydrogénation du butène en butane, du pentène en pentane, du 1,3-butadiène en butène, du vinylacétylène en butadiène, de l'isoprène en 2-méthylbutène, du 1,5-cyclooctadiène en cyclooctène, du 1,5,9-cyclododécatriène en cyclododécène, de l'anthracène en tétrahydroanthracène. L'hydrogénation peut être totale ou sélective, par exemple des dioléfines en monooléfines. L'hydrogénation peut être accompagnée d'une isomérisation, par exemple du 1-butène en 2-butène, du 1-pentène en 2-pentène.

Dans le procédé d'hydrogénation, le composé insaturé pourra être utilisé pur ou dilué par des hydrocarbures saturés ou insaturés tels que ceux qu'on trouve dans les "coupes" issues des divers procédés de raffinage des hydrocarbures comme par exemple les butanes et/ou des butènes avec le butadiène.

La température à laquelle se fera l'hydrogénation sera comprise entre - 10°C et 200°C, avantageusement la température est inférieure à 150°C, de préférence entre +10°C et moins de 150°C. La pression totale ou partielle d'hydrogène peut être comprise entre la pression atmosphérique ou une pression inférieure à la pression atmosphérique, et 20 MPa, de préférence entre la pression atmosphérique et 10 MPa.

La réaction catalytique d'hydrogénation des composés insaturés peut être conduite en système fermé, en système semi-ouvert ou en continu avec un ou plusieurs étages de réaction. A la sortie du réacteur la phase organique contenant les produits de réaction est séparée avantageusement par simple décantation de la phase polaire catalytique contenant le "sel fondu" et la majeure partie du catalyseur. La phase polaire qui contient au moins en partie le catalyseur, est, au moins en partie, retournée au réacteur, l'autre partie étant traitée pour éliminer les résidus du catalyseur.

Les composés insaturés auxquels le procédé peut avantageusement s'appliquer sont, par exemple, les butènes, les pentènes, le butadiène, l'isoprène, le pipérylène, le 1,5-cyclooctadiène.

Les exemples suivants illustrent l'invention sans en limiter la portée:

### EXEMPLE 1

Dans un réacteur en verre à double enveloppe d'une contenance de 50 mL purgé de l'air et de l'humidité et placé sous la pression atmosphérique d'hydrogène, on a introduit 4mL d'hexafluorophosphate de butylméthylimidazolium, 43,2 mg (0.05 mmole) du complexe [Rh(norbornadiène)(PPh₃)₂]⁺PF₆⁻ dissous dans 2 mL d'acétone et 2 mL de 1-pentène. On observe la présence de deux phases liquides la phase inférieure limpide étant colorée en brun et la phase hydocarbonée incolore. On a porté la pression d'hydrogène à 0,1 MPa et la température à 30°C et on a mis l'agitation en route. Après 2 heures on a arrêté l'agitation et on a laissé se décanter le mélange; on a soutiré la phase hydrocarbonée surnageante. La conversion du 1-pentène était de plus de 99 %, le pentane représentant 35% des produits et les 2-pentènes 65%. On a introduit une nouvelle charge de 1-pentène; après 2 heures de réaction la conversion du 1-pentène était de plus de 99 %. On a recommencé 3 fois la réaction en utilisant le même sel contenant le même complexe du rhodium avec les mêmes résultats, sans perte apparente de rhodium.

### EXEMPLE 2

On a repris le sel de l'exemple précédent contenant le complexe du rhodium et on a éliminé les composés organiques volatils en tirant sous vide. Sous atmosphère d'hydrogène on a introduit 2 mL de 1-pentène puis on a opéré dans les conditions du même exemple. On a obtenu les mêmes résultats et l'essai a pu être recommencé 3 fois.

### EXEMPLE 3

On a opéré comme dans l'exemple 1 à ceci près qu'on n'a pas introduit d'acétone. La phase polaire était colorée en brun et la phase hydrocarbonée incolore. La conversion était de 95 % et le pentane représentait 56 % des produits. On a recommencé l'essai 3 fois avec les mêmes résultats.

### EXEMPLE 4

On a repris le sel de l'exemple précédent contenant le complexe du rhodium du quel on a éliminé les composés organiques volatils en tirant sous vide. Sous atmosphère d'hydrogène on a introduit 5 ml d'heptane et 2 mL de 1-pentène puis on a opéré dans les conditions du même exemple. La phase organique était incolore. La conversion était de plus de 99 % et le pentane représentait 62 % des produits.

### EXEMPLE 5

On a repris le sel de l'exemple précédent contenant le complexe du rhodium du quel on a éliminé les composés organiques volatils en tirant sous vide. Sous atmosphère d'hydrogène on a introduit 18,4 mmoles de 1,3-cyclohexadiène. Dans les conditions de l'exemple 1 la conversion du cyclohexadiène était de 92,3 %, le cyclohexène représentant 90 % des produits.

### EXEMPLE 6

On a opéré comme dans l'exemple 3 à ceci près qu'on a remplacé les 4mL d'hexafluorophosphate de butylméthylimidazolium par 4 mL d'hexafluoroantimonate de butylméthylimidazolium. La phase polaire était colorée en rouge-brun et la phase organique incolore. La conversion était de 96 % le pentane représentant 83 % des produits et les 2-pentènes 17 %. On a recommencé l'essai 3 fois avec la même "sel fondu" et le même complexe du rhodium, avec les mêmes résultats.

### EXEMPLE 7

On a opéré comme dans l'exemple 1 à ceci près qu'on a remplacé le complexe [Rh(norbornadiène)(PPh₃)₂]⁺PF₆⁻ par 0.05 mmole du complexe [(norbornadiène)Rh(Ph₂PCH₂COPh)(PPh₃)]⁺[PF₆]⁻. La phase inférieure était colorée en orangé et la phase hydrocarbonée était incolore. Après 2 heures d'agitation le milieu a été décanté, la phase hydrocarbonée soutirée. La conversion du 1-pentène était de 98%. L'opération a été recommencée après avoir éliminé les composés organiques volatils en tirant sous vide, puis une autre fois en introduisant 5 mL d'heptane. Les résultats ont été identiques à ceux de l'essai initial..

### EXEMPLE 8

Dans un réacteur en verre à double enveloppe d'une contenance de 50 mL purgé de l'air et de l'humidité et placé sous la pression atmosphérique d'hydrogène, on a introduit 4mL d'hexafluoroantimonate de butylméthylimidazolium, 0.05 mmole du complexe [(norbornadiène)Rh(Ph₂PCH₂COPh)(PPh₃)]⁺[PF₆]⁻ et 2 mL de 1-pentène. On observe la présence de deux phases liquides la phase inférieure limpide étant colorée en brun et la phase hydocarbonée incolore. On a porté la pression à 0,1 MPa et la température à 30°C et on a mis l'agitation en route. Après 2 heures on a arrêté l'agitation et on a laissé se décanter le mélange; on a soutiré la phase hydrocarbonée surnageante. La conversion du 1-pentène était de 81 %, le pentane représentant 27 % des produits et les 2-pentènes 73 %. On a recommencé 2 fois la réaction en utilisant le même sel contenant le même complexe du rhodium avec les mêmes résultats, sans perte apparente de rhodium.

### EXEMPLE 9

Dans un réacteur en verre à pression d'une contenance de 50 mL purgé de l'air et de l'humidité et placé sous la pression atmoshérique d'hydrogène, on a introduit les 4 mL du sel ayant servi à l'exemple 5 et contenant le complexe du rhodium et du quel on a éliminé les composés organiques volatils en tirant sous vide. Sous atmosphère d'hydrogène on a introduit 81,5 mg d'anthracène dissous dans 5 mL de benzène. On observe la présence de deux phases liquides la phase inférieure limpide étant colorée en orangé-brun et la phase hydocarbonée incolore. On a porté la pression d'hydrogène à 0.5 MPa et la température à 60°C et on a mis l'agitation en route. Après 15 heures on a arrêté l'agitation et on a laissé se décanter le mélange; on a soutiré la phase hydrocarbonée surnageante. La conversion de l'anthracène était de 74 %, 70 % étant constitués de tétrahydroanthracène et le reste de dihydroanthracène.

### EXEMPLE 10

Dans un réacteur en verre à pression d'une contenance de 50 mL purgé de l'air et de l'humidité et placé sous la pression atmoshérique d'hydrogène, on a introduit 4mL d'hexafluoroantimonate de butylméthylimidazolium et 0.05 mmole du complexe [Rh(norbornadiène)(PPh₃)₂]⁺PF₆⁻, mélange qui avait servi préalablement à l'hydrogénation du 1-pentène et du quel on avait éliminé les composés organiques volatils en tirant sous vide. Sous atmosphère d'hydrogène on a introduit 81,5 mg d'anthracène dissous dans 5 mL de benzène. On observe la présence de deux phases liquides la phase inférieure limpide étant colorée en orangé-brun et la phase hydocarbonée incolore. On a porté la pression d'hydrogène à 0.5 MPa et la température à 60°C et on a mis l'agitation en route. Après 21 heures on a arrêté l'agitation et on a laissé se décanter le mélange; on a soutiré la phase hydrocarbonée surnageante. La conversion de l'anthracène était de 54 %, 88 % étant constitués de tétrahydroanthracène et le reste de dihydroanthracène.

## Revendications

1. Composition catalytique comprenant un solvant non-aqueux à caractère ionique liquide à une température inférieure à 150°C contenant majoritairement au moins un sel d'ammonium et/ou de phosphonium quaternaire de formule générale Q⁺A⁻, dans laquelle Q⁺ représente un ammonium quaternaire et/ou phosphonium quaternaire, et A⁻ représente un anion choisi dans le groupe constitué par le tétrafluoroborate, le tétrachloroborate, l'hexafluorophosphate, l'hexafluoroantimonate, l'hexafluoroarsénate, trichlorozincate, le dichloro cuprate, le tétrachloroaluminate, le trifluoroarsénate, le trifluorométhylsulfonate, le fluorosulfonate, l'heptachloroaluminate, le décachloroaluminate, le trichlorocuprate, le tétrachlorocuprate, ladite composition comprenant également au moins un composé d'au moins un métal de transition des groupes 8, 9, 10

2. Composition catalytique selon la revendication 1 dans laquelle le métal de transition est choisi dans le groupe constitué par le ruthénium, le rhodium, l'iridium, le cobalt, le platine et le palladium.

3. Composition catalytique selon la revendication 1 dans laquelle le métal de transition est le nickel et l'anion est choisi dans le groupe constitué par le tétrafluoroborate, le tétrachloroborate, l'hexafluorophosphate, l'hexafluoroantimonate, l'hexafluoroarsénate, le dichloro cuprate, le trifluorométhylsulfonate, le fluorosulfonate, le trichlorozincate et le trichlorocuprate, le tétrachlorocuprate.

4. Composition catalytique selon l'une des revendications précédentes dans laquelle le cation ammonium et/ou de phosphonium quaternaires sont choisis dans le groupe constitué par les cations de fomule générale :
R¹R²R³R⁴N+
R¹R²N=CR³R⁴+
R¹R²R³R⁴P+
R¹R²P=CR³R⁴+ 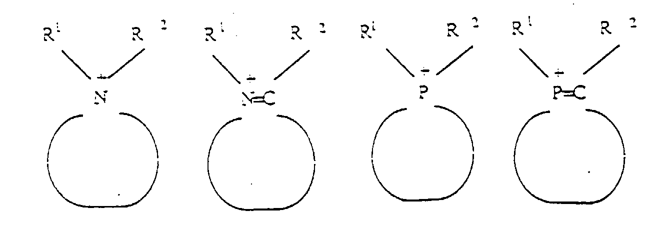
dans lesquelles R¹, R², R³, R⁴ identiques ou différents représentent l'hydrogène, à l'exception de NH4⁺, et des restes hydrocarbyles ayant 1 à 12 atomes de carbone, et dans lesquelles les cycles sont constitués de 4 à 10 atomes.

5. Composition catalytique selon l'une des revendications précédentes dans laquelle le cation ammonium et/ou phosphonium quaternaires ont pour formules générales:
R¹R²+N=CR³-R5-R³C=N+R¹R²
R¹R²+P=CR³-R⁵-R³C=P+R¹R²
dans laquelle R¹, R², R³, identiques ou différents représentent l'hydrogène ou des restes hydrocarbyles ayant 1 à 12 atomes de carbone, et R⁵ représente un reste alkylène ou phénylène.

6. Composition catalytique selon l'une des revendications précédentes dans laquelle le cation ammonium et/ou phosphonium quaternaires sont choisis dans le groupe constitué par le N-butylpyridinium, le N-éthylpyridinium, le butyl-3 méthyl-1 imidazolium, le diéthylpyrazolium, l'éthyl-3 methyl-1 imidazolium, le pyridinium, le triméthylphénylammonium, l'éthyl-3 méthyl-1 imidazolium, le tétrabutylphosphonium.

7. Composition catalytique selon l'une des revendications précédentes dans laquelle les sels d'ammonium et/ou de phosphonium quaternaires sont choisis dans le groupe constitué par l'hexafluorophosphate de N-butylpyridinium, le tétrafluoroborate de N-éthyl pyridinium, le tétrafluoroborate de tétrabutylphosphonium, l'hexafluoroantimonate de butyl-3 méthyl-1 imidazolium, l'hexafluorophosphate de butyl-3 méthyl-1 imidazolium, le trifluorométhylsulfonate de butyl-3 méthyl-1 imidazolium, le fluorosulfonate de pyridium, l'hexafluorophosphate de triméthylphénylammonium, le tétrachloroaluminate de butyl-3 méthyl-1 imidazolium, l'heptachloroaluminate de butyl-3 méthyl-1 imidazolium, le chlorure de triméthylphényl ammonium, le chlorure d'éthyl-3 méthyl-1 imidazolium, le bromure de tétrabutylphosphonium, le chlorure de N-butylpyridinium, le bromure de N,-éthylpyridinium, le chlorure de butyl-3 méthyl-1 imidazolium, le chlorure de diéthylpyrazolium, le chlorhydrate de pyridinium.

8. Composition catalytique selon les revendications précédentes dans laquelle le composé de métal de transition est un complexe de métal de transition.

9. Composition catalytique selon l'une des revendications 1, 2, ou 8, dans laquelle le métal de transition, dans le complexe, est lié à des ligants ioniques ou neutres.

10. Composition catalytique selon l'une des revendications 1 ou 2 dans laquelle les composés des métaux des groupes 8, 9 et 10 sont les chlorures, les bromures ou les iodures.

11. Composition catalytique selon l'une les revendications 8 ou 9 dans laquelle les complexes des métaux des groupes 8 et 9 sont choisis dans le groupe formé par RuH₄(PPh₃)₂, RhCl(PPh₃)₃, [Rh(norbornadiène)(PPh₃)₂]⁺ [PF₆]⁻, IrCl(PPh₃)₃, HRh(CO)(PPh₃)₃, (C₅H₅)RhCl₂,IrCl(CO)(PPh₃)₂, [Rh(norbornadiène)(PPh₃)(Ph₂PCH₂COPh)]⁺[PF₆]⁻ [Rh(norbornadiène)(bisdiphénylphosphinoéthane)]⁺[PF₆]⁻, [Rh(norbornadiène)(bisdiphénylarsinoéthane)]⁺[PF₆]⁻, [Ru(norbornadiène)(C₅Me₅)]⁺[BF₄]⁻,[(C₆Me₆)RuCl₂]₂,[(C₆H₆)RuCl₃Ru (C₆H₆)]⁺PF₆⁻,

12. Composition catalytique selon l'une des revendications précédentes dans laquelle la concentration du complexe des métaux de transition des groupes 8 à 10 par rapport au sel d'ammonium et/ou de phosphonium est de 1 à 500 mmoles par litre.

13. Catalyseur à base d'un support poreux organique ou minéral, imprégné par la composition catalytique selon l'une des revendications 1 à 12.

14. Procédé pour l'hydrogénation des doubles ou triples liaisons entre atomes de carbone des composés insaturés en présence d'une composition catalytique selon l'une au moins des revendications 1 à 12.

15. Procédé selon la revendication 14, dans lequel la composition catalytique a été imprégnée sur un support poreux organique ou minéral.

16. Procédé selon l'une des revendications 14 ou 15 dans lequel le composé insaturé est une monooléfine.

17. Procédé selon l'une des revendications 14 ou 15 dans lequel le composé insaturé est une dioléfine, ou un composé acétylénique.

18. Procédé selon la revendication 17 dans lequel la dioléfine ou le composé acétylénique est hydrogéné sélectivement en monooléfine.

19. Procédé selon l'une des revendications 14 ou 15 dans lequel le composé insaturé est un composé aromatique polynucléaire.

20. Procédé selon la revendication 19 dans lequel le composé aromatique polynucléaire est l'anthracène.

21. Procédé selon l'une des revendications 14 ou 15 dans lequel l'hydrogénation est accompagnée d'isomérisation.

22. Procédé selon l'une des revendications 14 à 21 dans lequel la phase hydrocarbonée est séparée de la phase polaire, ladite phase polaire contenant au moins une partie du catalyseur étant au moins en partie recyclée dans le réacteur d'hydrogénation.

23. Procédé selon l'une des revendications 14 à 22 opérant entre -10 et 200°C, sous une pression comprise entre 0.1 MPa et 20 MPa.

## Patentansprüche

1. Katalytische Zusammensetzung, die ein nicht-wäßriges Lösungsmittel mit ionischem Charakter enthält, das bei einer Temperatur unterhalb 150°C flüssig ist, enthaltend hauptsächlich mindestens ein quaternäres Ammonium- und/oder Phosphoniumsalz der allgemeinen Formel Q⁺A⁻, worin Q⁺ für quaternäres Ammonium und/oder Phosphonium und A⁻ für ein Anion stehen, das ausgewählt wird aus der Gruppe, die besteht aus Tetrafluoroborat, Tetrachloroborat, Hexafluorophosphat, Hexafluoroantimonat, Hexafluoroarsenat, Trichlorozinkat, Dichlorocuprat, Tetrachloroaluminat, Trifluoroarsenat, Trifluoromethylsulfonat, Fluorosulfonat, Heptachloroaluminat, Decachloroaluminat, Trichlorocuprat und Tetrachlorocuprat, und außerdem mindestens eine Verbindung mindestens eines Übergangsmetalls der Gruppen 8, 9 und 10 des PSE.

2. Katalytische Zusammensetzung nach Anspruch 1, in der das Übergangsmetall ausgewählt wird aus der Gruppe, die besteht aus Ruthenium, Rhodium, Iridium, Kobalt, Platin und Palladium.

3. Katalytische Zusammensetzung nach Anspruch 1, in der das Übergangsmetall Nickel ist und das Anion ausgewählt wird aus der Gruppe, die besteht aus Tetrafluoroborat, Tetrachloroborat, Hexafluorophosphat, Hexafluoroantimonat, Hexafluoroarsenat, Dichlorocuprat, Trifluoromethylsulfonat, Fluorosulfonat, Trichlorozinkat, Trichlorocuprat und Tetrachlorocuprat.

4. Katalytische Zusammensetzung nach einem der vorhergehenden Ansprüche, in der das quaternäre Ammonium- und/oder Phosphoniumkation ausgewählt wird (werden) aus der Gruppe, die besteht aus Kationen der allgemeinen Formel:
R¹R²R³R⁴N⁺
R¹R²N=CR³R⁴⁺
R¹R²R³R⁴P⁺
R¹R²P=CR³R⁴⁺ 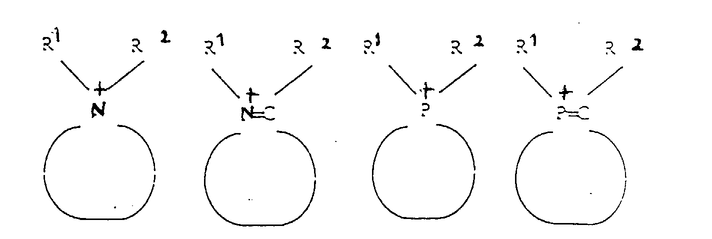
worin R¹, R², R³, R⁴, die gleich oder voneinander verschieden sind, für Wasserstoff, mit Ausnahme von NH₄⁺, und für Hydrocarbylreste mit 1 bis 12 Kohlenstoffatomen stehen und in denen die Ringe aus 4 bis 10 Atomen bestehen.

5. Katalytische Zusammensetzung nach einem der vorhergehenden Ansprüche, in der die quaternären Ammonium- und/oder Phosphonium-Kationen die allgemeinen Formeln haben:
R¹R²⁺N=CR³-R⁵-R³C=N⁺R¹R²
R¹R²⁺P=CR³-R⁵-R³C=P⁺R¹R²
worin R¹, R², R³, die gleich oder voneinander verschieden sind, für Wasserstoff oder Hydrocarbyl-Reste mit 1 bis 12 Kohlenstoffatomen und R⁵ für einen Alkylen- oder Phenylen-Rest stehen.

6. Katalytische Zusammensetzung nach einem der vorhergehenden Ansprüche, in der das quaternäre Ammonium- und/oder Phosphonium-Kation ausgewählt wird (werden) aus der Gruppe, die besteht aus N-Butylpyridinium, N-Ethylpyridinium, 3-Butyl-1-methyl-imidazolium, Diethylpyrazolium, 3-Ethyl-1-methyl-imidazolium, Pyridinium, Trimethylphenylammonium, 3-Ethyl-1-methylimidazolium und Tetrabutylphosphonium.

7. Katalytische Zusammensetzung nach einem der vorhergehenden Ansprüche, in der die quaternären Ammonium- und/oder Phosphonium-Salze ausgewählt werden aus der Gruppe, die besteht aus N-Butylpyridiniumhexafluorophosphat, N-Ethylpyridinium-tetrafluoroborat, Tetrabutylphosphonium-tetrafluoroborat, 3-Butyl-1-methyl-imidazolium-hexafluoroantimonat, 3-Butyl-1-methyl-imidazolium-hexafluorophosphat, 3-Butyl-1-methyl-imidazoliumtrifluoromethylsulfonat, Pyridinium-fluorosulfonat, Trimethylphenylammoniumhexafluorophosphat, 3-Butyl-1-methyl-imidazolium-tetrachloroaluminat, 3-Butyl-1-methyl-imidazolium-heptachloroaluminat, Trimethylphenylammoniumchlorid, 3-Ethyl-1-methyl-imidazolium-chlorid, Tetrabutylphosphonium-bromid, N-Butylpyridinium-chlorid, N-Ethylpyridinium-bromid, 3-Butyl-1-methyl-imidazolium-chlorid, Diethylpyrazolium-chlorid und Pyridinium-chlorhydrat.

8. Katalytische Zusammensetzung nach den vorhergehenden Ansprüche, in der die Verbindung des Übergangsmetalls ein Komplex eines Übergangsmetalls ist.

9. Katalytische Zusammensetzung nach einem der Ansprüche 1, 2 oder 8, in der das Übergangsmetall in dem Komplex an ionische oder neutrale Liganden gebunden ist.

10. Katalytische Zusammensetzung nach einem der Ansprüche 1 oder 2, in der die Verbindungen der Metalle der Gruppen 8, 9 und 10 des PSE die Chloride, Bromide oder lodide sind.

11. Katalytische Zusammensetzung nach einem der Ansprüche 8 oder 9, in der die Komplexe der Metalle der Gruppen 8 und 9 des PSE ausgewählt werden aus der Gruppe, die besteht aus RuH₄(PPh₃)₂, RhCl(PPh₃)₃, [Rh(Norbornadien)(PPh₃)₂]⁺[PF₆]⁻, IrCl((PPh₃)₃, HRh(CO)(PPh₃)₃, (C₅H₅)RhCl₂, IrCl(CO)(PPh₃)₂, [Rh(Norbornadien)(PPh₃)(Ph₂PCH₂COPh)]⁺[PF₆]⁻, [Rh(Norbornadien)(bisdiphenylphosphinoethan)]⁺[PF₆]⁻, [Rh(Norbornadien)(bisdiphenylarsinoethan)]⁺[PF₆]⁻, [Ru(Norbornadien)(C₅Me₅)]⁺[BF₄]⁻,[(C₆Me₆)RuCl₂]₂ und [(C₆H₆)RuCl₃Ru(C₆H₆)]⁺PF₆⁻.

12. Katalytische Zusammensetzung nach einem der vorhergehenden Ansprüche, in der die Konzentration des Komplexes der Übergangsmetalle der Gruppen 8 bis 10 des PSE, bezogen auf das Ammonium- und/oder Phosphoniumsalz, 1 bis 500 mmol pro Liter beträgt.

13. Katalysator auf Basis eines organischen oder mineralischen porösen Trägers, der mit der erfindungsgemäßen Zusammensetzung nach einem der Ansprüche 1 bis 12 imprägniert ist.

14. Verfahren zur Hydrierung der Doppel- oder Dreifach-Bindungen zwischen den Kohlenstoffatomen von ungesättigten Verbindungen in Gegenwart einer katalytischen Zusammensetzung nach mindestens einem der Ansprüche 1 bis 12.

15. Verfahren nach Anspruch 14, bei dem die katalytische Zusammensetzung durch Imprägnieren auf einen organischen oder mineralischen porösen Träger aufgebracht worden ist.

16. Verfahren nach einem der Ansprüche 14 oder 15, bei dem die ungesättigte Verbindung ein Monoolefin ist.

17. Verfahren nach einem der Ansprüche 14 oder 15, bei dem die ungesättigte Verbindung ein Diolefin oder eine Acetylen-Verbindung ist.

18. Verfahren nach Anspruch 17, bei dem das Diolefin oder die Acetylen-Verbindung selektiv zum Monoolefin hydriert wird.

19. Verfahren nach einem der Ansprüche 14 oder 15, bei dem die ungesättigte Verbindung eine mehrkernige aromatische Verbindung ist.

20. Verfahren nach Anspruch 19, bei dem die mehrkernige aromatische Verbindung Anthracen ist.

21. Verfahren nach einem der Ansprüche 14 oder 15, bei dem die Hydrierung von einer Isomerisation begleitet ist.

22. Verfahren nach einem der Ansprüche 14 bis 21, bei dem die Kohlenwasserstoff-Phase von der polaren Phase abgetrennt wird, die mindestens einen Teil des Katalysators enthält, der mindestens zum Teil in den Hydrierungs-Reaktor im Kreislauf zurückgeführt wird.

23. Verfahren nach einem der Ansprüche 14 bis 22, bei dem man zwischen -10 und 200°C unter einem Druck zwischen 0,1 MPa und 20 MPa arbeitet.

## Claims

1. A catalytic composition comprising a non-aqueous solvent which is ionic in nature and liquid at a temperature below 150°C mainly containing at least one quaternary ammonium and/or phosphonium salt with general formula Q⁺A⁻, where Q⁺ represents a quaternary ammonium and/or phosphonium cation, and A⁻ represents an anion selected from the group constituted by tetrafluoroborate, tetrachloroborate, hexafluorophosphate, hexafluoroantimonate, hexafluoroarsenate, trichlorozincate, dichlorocuprate, tetrachloroaluminate, trifluoroarsenate, trifluoromethylsulphonate, fluorosulphonate,. heptachloroaluminate, decachloroaluminate, trichlorocuprate and tetrachlorocuprate, said composition also comprising at least one compound of at least one transition metal from groups 8, 9 or 10.

2. A catalytic composition according to claim 1, in which the transition metal is selected from the group constituted by ruthenium, rhodium, iridium, cobalt, platinum and palladium.

3. A catalytic composition according to claim 1, in which the transition metal is nickel and the anion is selected from the group constituted by tetrafluoroborate, tetrachloroborate, hexafluorophosphate, hexafluoroantimonate, hexafluoroarsenate, dichlorocuprate, trifluoromethylsulphonate, fluorosulphonate, trichlorozincate, trichlorocuprate, and tetrachlorocuprate,.

4. A catalytic composition according to any one of the preceding claims, in which the quaternary ammonium and/or phosphonium cation is selected from the group constituted by cations with the general formula:
R¹ R² R³ R⁴N⁺
R¹ R²N=C R³ R⁴⁺
R¹ R² R³ R⁴P⁺
R¹ R²P=C R³ R⁴⁺ 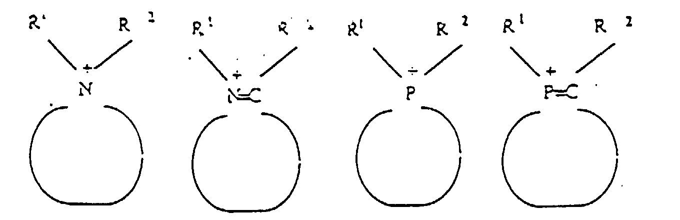
where R¹, R², R³ and R⁴, which may be identical or different, represent hydrogen, with the exception of NH_{4⁺}, and hydrocarbon residues containing 1 to 12 carbon atoms, and in which the cycles are constituted by 4 to 10 atoms.

5. A catalytic composition according to any one of the preceding claims, in which the quaternary ammonium and/or phosphonium cation has one of the following general formula:
R¹R²N⁺=CR³-R⁵-R³C=N⁺R¹R²
R¹R²P⁺=CR³-R⁵-R³C=P⁺R¹R²
where R¹, R² and R³ which may be identical or different, represent hydrogen or hydrocarbon residues containing 1 to 12 carbon atoms, and R⁵ represents an alkylene or phenylene residue.

6. A catalytic composition according to any one of the preceding claims, in which the quaternary ammonium and/or phosphonium cation is selected from the group constituted by N-butylpyridinium, N-ethylpyridinium, 3-butyl-1-methylimidazolium, diethylpyrazolium, 3-ethyl-1-methylimidazolium, pyridinium, trimethylphenylammonium, 3-ethyl-1-methylimidazolium, and tetrabutylphosphonium.

7. A catalytic composition according to any one of the preceding claims, in which the quaternary ammonium and/or phosphonium salts are selected from the group constituted by N-butylpyridinium hexafluorophosphate, N-ethylpyridinium tetrafluoroborate, tetrabutylphosphonium tetrafluoroborate, 3-butyl-1-methylimidazolium hexafluoroantimonate, 3-butyl-1-methylimidazolium hexafluorophosphate, 3-butyl-1-methylimidazolium trifluoromethylsulphonate, pyridinium fluorosulphonate, trimethylphenylammonium hexafluorophosphate, 3-butyl-1-methylimidazolium tetrachloroaluminate, 3-butyl-1-methylimidazolium heptachloroaluminate, trimethylphenylammonium chloride, 3-ethyl-1-methylimidazolium chloride, N-ethylpyridinium bromide, 3-butyl-1-methylimidazolium chloride, diethylpyrazolium chloride, pyridinium hydrochloride, tetrabutylphosphonium bromide, N-butylpyridinium chloride.

8. A catalytic composition according to the preceding claims, in which the transition metal compound is a transition metal complex.

9. A catalytic composition according to any one of claims 1, 2 or 8, in which the transition metal in the complex is bonded to ionic or neutral ligands.

10. A catalytic composition according to claim 1 or claim 2 in which the metal compounds from groups 8, 9 or 10 are chlorides, bromides or iodides.

11. A catalytic composition according to claim 8 or claim 9, in which the complexes of metals from groups 8 or 9 are selected from the group formed by RuH₄(PPh₃)₂, RhCl(PPh₃)₃,[Rh(norbornadiene) (PPh₃)₂]⁺[PF₆]⁻, IrCl(PPh₃)₃, HRh(CO)(PPh₃)₃, (C₅H₅)RhCl₂, IrCl(CO)(PPh₃)₂, [Rh(norbornadiene) (PPh₃)(Ph₂PCH₂COPh)]⁺[PF₆]⁻, [Rh(norbornadiene) (bisdiphenyphosphinoethane)]⁺[PF₆]⁻, [Rh(norbornadiene) (bisdiphenylarsinoethane)]⁺[PF₆]⁻, [Ru(norbornadiene)(C₅Me₅]⁺[BF₄]⁻, [(C₆Me₆)RuCl₂]₂, [(C₆H₆)RuCl₃Ru(C₆H₆)]PF₆.

12. A catalytic composition according to any one of the preceding claims, in which the concentration of the complex of transition metals from groups 8 to 10 is 1 to 500 mmoles per litre with respect to the ammonium and/or phosphonium salt.

13. A catalyst based on a porous organic or mineral support impregnated with the catalytic composition according to any one of claims 1 to 12.

14. A process for the hydrogenation of double or triple bonds between carbon atoms in unsaturated compounds in the presence of a catalytic composition according to at least one of claims 1 to 12.

15. A process according to claim 14, in which the catalytic composition has been impregnated into a porous organic or inorganic support.

16. A process according to claim 14 or 15, in which the unsaturated compound is a monoolefin.

17. A process according to claim 14 or claim 15, in which the unsaturated compound is a diolefin or an acetylenic compound.

18. A process according to claim 17, in which the diolefin or acetylenic compound is selectively hydrogenated to a monoolefin.

19. A process according to claim 14 or claim 15, in which the unsaturated compound is a polynuclear aromatic compound.

20. A process according to claim 19, in which the polynuclear aromatic compound is anthracene.

21. A process according to claim 14 or claim 15, in which hydrogenation is accompanied by isomerisation.

22. A process according to any one of claims 14 to 21, in which the hydrocarbon phase is separated from the polar phase, said polar phase containing at least a portion of the catalyst being recycled at least in part to the hydrogenation reactor.

23. A process according to any one of claims 14 to 22, carried out at a temperature between -10°C and 200°C, at a pressure in the range 0.1 MPa to 20 MPa.
